# EUROPEAN PATENT APPLICATION

(11) **EP 2 312 810 A1**
(43) Date of publication of application: **20.04.2011**
(21) Application number: 09805079.2
(22) Date of filing: 03.08.2009
(51) Int. Cl.: H04M 1/00, H04M 15/30

(54) **COMMUNICATION TERMINAL DEVICE, LIGHTING CONTROL METHOD, LIGHTING CONTROL PROGRAM**

(30) Priority: 05.08.2008 JP 2008202060
(71) Applicant: NEC Corporation, Minato-ku Tokyo 108-8001 (JP)
(72) Inventor: OOSAWA, Yousuke, Tokyo 108-8001 (JP)
(74) Representative: Vossius & Partner
(86) International application number: PCT/JP2009/064074
(87) International publication number: WO 2010/016597

(57) **Abstract**

In order to make it possible for the user to recognize a charging system corresponding to a communication function that is being used, a communication terminal device includes illumination means and lighting control means for displaying a charge state corresponding to a type of the communication function that is being used in the communication terminal device by an illumination color of the illumination means.

## Description

### Technical field

This invention relates to a communication terminal device having a plurality of communication functions to which different charging systems are applied, a lighting control method used for the communication terminal device, and a lighting control program.

### Background art

In a communication fee structure of a mobile phone, a different charging system is mostly applied to according to the communication function (for example, voice communication, e-mail, Internet, data communication, or the like) that are being used in the mobile phone. A user may use the communication function of which a communication fee is charged based on a communication time or a communication data amount without sufficiently understanding an applied charging system. In this case, a large amount of communication fee may be charged to the user by a communication provider. Therefore, this becomes a social problem. This problem arises from a situation in which the user cannot recognize the charging system corresponding to the communication function that is being used because the charging system applied to each communication function of the mobile phone is different for each communication function. Therefore, a mobile phone in which the user can recognize the charging system corresponding to the communication function that is being used is desired.

As a technology related to this, for example, a fee notification device is described in Japanese Patent Application Laid-Open No. 2001-274927. In the fee notification device, when transmission is performed, a charge calculation information acquisition process unit acquires charge calculation information of a communication service from a transmission source to a transmission destination based on service information, fee information, and the like of the user that are transmitted from an external communication facility. A charge progress status calculation process unit calculates the progress status of the charging based on a usage history of the communication service and the above-mentioned acquired charge calculation information. A charge progress status notification process unit receives a notification of the progress status of the calculated charge. As a result, because the user can be notified of the charge for the communication service that the user has used, the user can use the communication service efficiently and economically.

A communication terminal device described in Japanese Patent Application Laid-Open No. 2003-309874 is for example, a mobile phone. The communication terminal device notifies a user of a communication system whose communication cost is the lowest at the time based on an illumination color of a communication cost notification LED (Light Emitting Diode). By using this mobile terminal device, the user can immediately recognize relative merits of the communication cost and whereby the user can determine whether to perform data communication or not based on the relative merits of the communication cost without taking the communication system into consideration. Consequently, because this mobile terminal device can prevent from being erroneously selected the communication system which requires a high communication cost, the user can perform the data communication by the communication system that meets the desired communication cost.

### Disclosure of the invention

### Problems to be solved by the invention

However, the technology described in the above-mentioned documents has the following problems.

The fee notification device described in Japanese Patent Application Laid-Open No. 2001-274927 gives notification of whether or not a remaining amount of flat-rate use is "0" or more. Therefore, there is a problem in which the user is unable to know a charge state corresponding to the communication function that is currently being used.

The communication terminal device described in Japanese Patent Application Laid-Open No. 2003-309874 notifies the user of the communication system whose communication cost is the lowest at the time based on the illumination color of the communication cost notification LED. Therefore, there is a problem in which the user is unable to know the charge state corresponding to the communication function that is currently being used.

The present invention is made in view of the above described situation. An object of the present invention is to provide a communication terminal device of which the user can recognize the charging system corresponding to a communication function that is being used, a lighting control method used for the communication terminal device, and a lighting control program.

### Means for solving the problems

A first communication terminal device of the present invention includes illumination means and lighting control means for displaying a charge state corresponding to a type of a communication function that is being used in the communication terminal device by an illumination color of the illumination means.

A first lighting control method of the present invention includes displaying a charge state corresponding to a type of a communication function that is being used in a communication terminal device by an illumination color of illumination means.

A first lighting control program of the present invention is characterized by causing a computer to perform a process for displaying a charge state corresponding to a type of a communication function that is being used in a communication terminal device by an illumination color of an illumination unit.

### Effect of the invention

According to the configuration of the present invention, an effect in which the user can recognize the charge state and then use the communication function with an easy mind can be obtained.

### Brief description of the drawings

Fig. 1 is a block diagram showing an electrical configuration of an essential portion of a mobile phone according to one exemplary embodiment of this invention.
Fig. 2 is a schematic view showing an appearance and a structure of the essential portion of the mobile phone shown in Fig. 1.
Fig. 3 is a block diagram showing an electrical configuration of an essential portion of a control unit shown in Fig. 1.
Fig. 4 is a figure showing an example of information of each communication function of a mobile phone and a charging system corresponding to the each communication function that is held in a charge state determination module shown in Fig. 3.
Fig. 5 is a figure showing an example of information of each charging system and a key backlight illumination color corresponding to the each charging system that is held in a key backlight illumination color determination module shown in Fig. 3.
Fig. 6 is a flow chart illustrating operation of a control unit shown in Fig. 3.

### Description of symbol

1 mobile phone
16 key operation unit
17 key backlight (illumination means)
17a lighting element (a part of illumination means)
18 control unit (lighting control means)
18a CPU (Central Processing Unit) (a part of lighting control means)
18b ROM (Read Only Memory) (a part of lighting control means)
18c RAM (Random Access Memory) (a part of lighting control means)
31 communication function monitor module (communication function monitor means, a part of lighting control means)
32 communication function information storage unit (a part of lighting control means)
33 charge state determination module (charge state determination means, a part of lighting control means)
34 charge state storage unit (a part of lighting control means)
35 key backlight illumination color determination module (illumination color determination means, a part of lighting control means)
36 key backlight illumination color information storage unit (a part of lighting control means)
37 key backlight illumination color control module (illumination color control means, a part of lighting control means)

### Best mode for carrying out the invention

### Exemplary embodiment 1

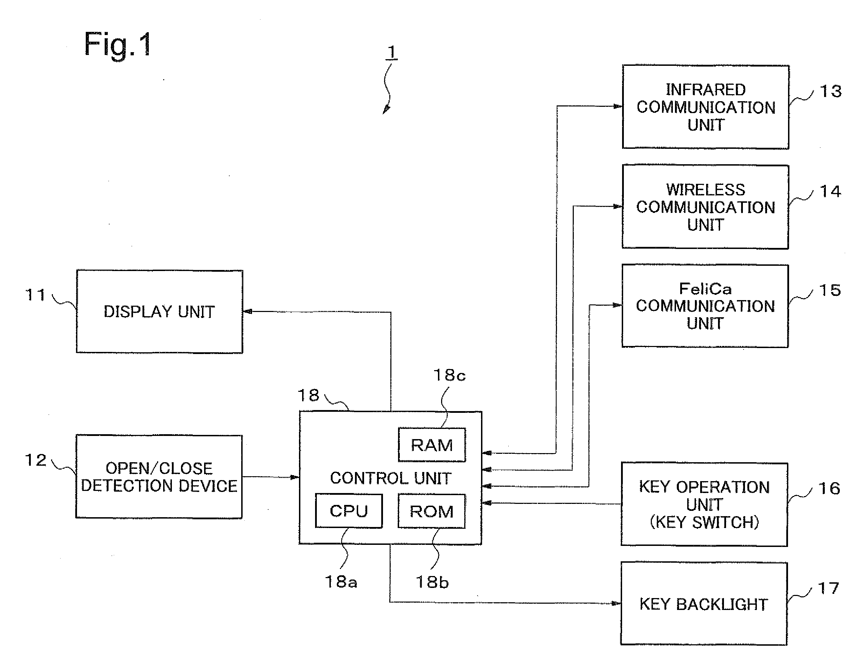

Fig. 1 is a block diagram showing an electrical configuration of an essential portion of a communication terminal device according to an exemplary embodiment 1 of this invention. Here, the communication terminal device will be described by taking a mobile phone as an example.

As shown in Fig. 1, a mobile phone 1 of this example includes a display unit 11, an open/close detection device 12, an infrared communication unit 13, a wireless communication unit 14, a FeliCa (registered trademark) communication unit 15, a key operation unit 16, a key backlight 17, and a control unit 18. The display unit 11 is for example, a liquid crystal display device and performs a predetermined display as a user interface. The open/close detection device 12 is for example, a Hall IC (Hall Effect Integrated Circuit) and detects an open/close state of a case of the mobile phone as the user interface when the mobile phone 1 has a foldable case.

The infrared communication unit 13 performs data communication with another mobile phone or a transmission/reception terminal (not shown) by infrared rays. The wireless communication unit 14 is wirelessly connected to a wireless base station (not shown) via an antenna (not shown) by a wireless signal. The wireless base station is connected to a public network via a visited mobile switching center and a gateway mobile switching center (not shown). In particular, in this exemplary embodiment, the wireless communication unit 14 performs processes such as modulation to a transmission signal generated by a transmission operation, demodulation to a reception signal generated by a reception operation, and the like. Further, the wireless communication unit 14 performs data communication with for example, a network server connected to the public network. The FeliCa communication unit 15 performs data communication with another mobile phone or the transmission/reception terminal (not shown) by a technology of a non-contact IC card. The key operation unit 16 has a plurality of key switches as the user interface for performing a predetermined operation. The key backlight 17 is composed of for example, a LED or the like and arranged at a back side of the key operation unit 16 to illuminate each of the above-mentioned key switches.

The control unit 18 has a CPU 18a, a ROM 18b, and a RAM 18c. The CPU 18a controls an entire mobile phone 1. The ROM 18b stores a computer-readable key backlight control program for operating the CPU 18a. The RAM 18c records various information. In particular, in this exemplary embodiment, the control unit 18 displays the charge state corresponding to a type of the communication function that is being used (for example, voice communication, e-mail, Internet, data communication, or the like) by the illumination color of the key backlight 17. In this case, the key backlight 17 emits light of an illumination color that is set. The control unit 18 sets the illumination color of the key backlight 17 to a different color according to the charge state corresponding to a type of the communication function that is being used.

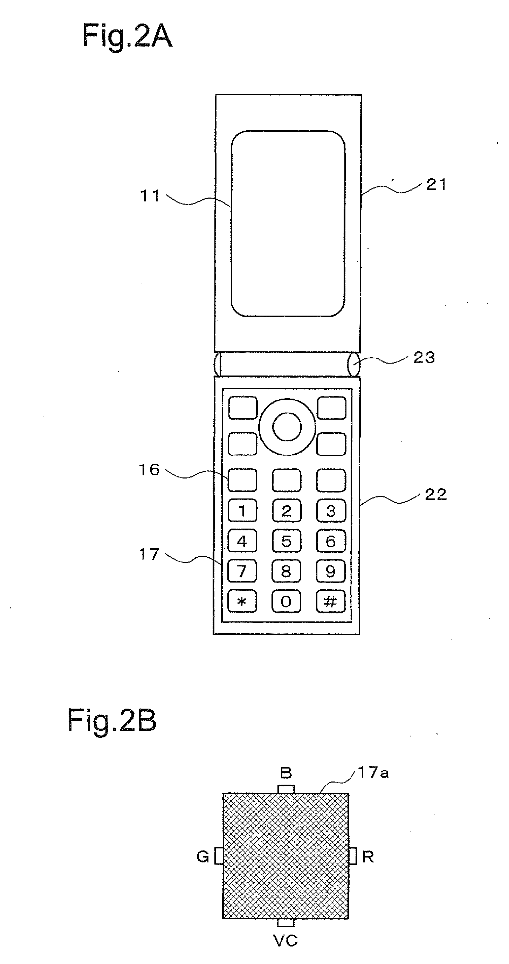

Fig. 2A and Fig. 2B are schematic diagrams showing an appearance and a structure of the essential portion of the mobile phone 1 shown in Fig. 1 , respectively.

As shown in Fig. 2A, the mobile phone 1 includes an upper unit 21 and a lower unit 22. The upper unit 21 has the display unit 11 on a front side thereof. The lower unit 22 has the key operation unit 16 including the key switch on a front side thereof. The key backlight 17 is provided at a back side of the key operation unit 16. The mobile phone 1 has a foldable structure in which the mobile phone 1 can be folded via a hinge unit 23 so that the front side of the upper unit 21 faces the front side of the lower unit 22. The key backlight 17 has a lighting element 17a corresponding to each of the key switches of the key operation unit 16 as shown in Fig. 2B. The lighting element 17a has LEDs of R (red), G (green), and B (blue), and a terminal VC for power supply. The control unit 18 shown in Fig. 1, for example, individually controls each brightness of the LEDs of R (red), G (green), and B (blue) of the lighting element 17a corresponding to each of the key switches and thereby controls the illumination color of the key backlight 17 by the additive color mixture.

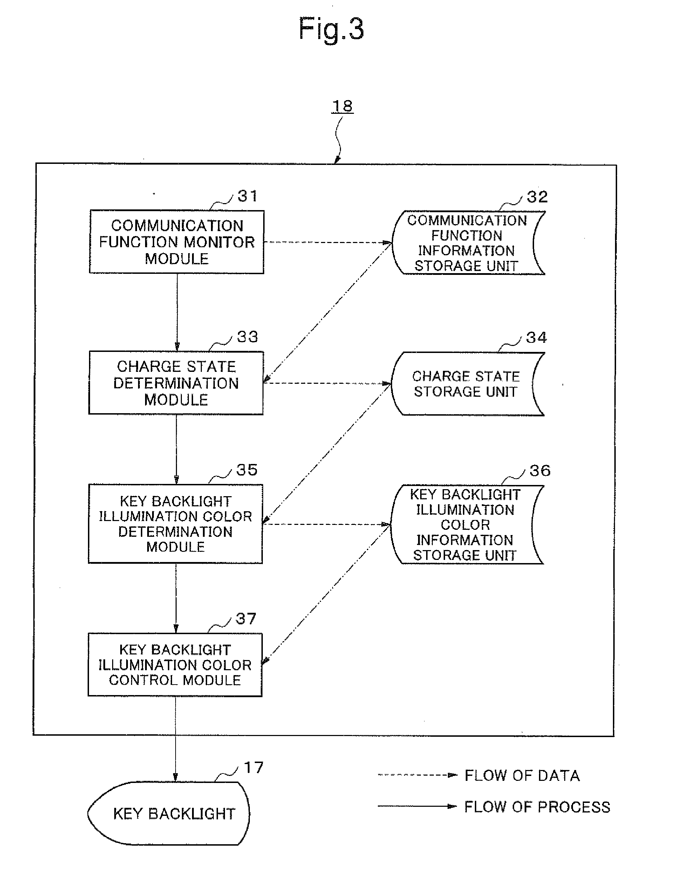

Fig. 3 is a block diagram showing an electrical configuration of the essential portion of the control unit 18 shown in Fig. 1.

As shown in Fig. 3, this control unit 18 includes a communication function monitor module 31, a communication function information storage unit 32, a charge state determination module 33, a charge state storage unit 34, a key backlight illumination color determination module 35, a key backlight illumination color information storage unit 36, and a key backlight illumination color control module 37. The communication function monitor module 31 monitors the communication function (for example, voice communication, e-mail, Internet, data communication, or the like) that has been activated in the mobile phone 1 and generates information of the communication function. The communication function information storage unit 32 is provided in a memory area of the RAM 18c shown in Fig. 1 and records the information of the above-mentioned communication function that is generated in the communication function monitor module 31. The charge state determination module 33 holds information of each communication function of the mobile phone 1 and the charging system corresponding to the each communication function in advance. The charge state determination module 33 reads out the information of the above-mentioned communication function from the communication function information storage unit 32 and also determines the current charge state based on the information of the charging system corresponding to the information of the communication function.

The charge state storage unit 34 is provided in a memory area of the RAM 18c and records the information of the current charge state determined in the charge state determination module 33. The key backlight illumination color determination module 35 holds information of the above-mentioned each charging system and the key backlight illumination color corresponding to the each charging system in advance. The key backlight illumination color determination module 35 reads out the information of the current charge state from the charge state storage unit 34 and determines the key backlight illumination color based on the charging system corresponding to the information of the charge state. The key backlight illumination color information storage unit 36 is provided in the memory area of the RAM 18c and records the information of the key backlight illumination color determined by the key backlight illumination color determination module 35. The key backlight illumination color control module 37 reads out the information of the key backlight illumination color from the key backlight illumination color information storage unit 36 and also makes the key backlight 17 emit light based on the information of the key backlight illumination color.

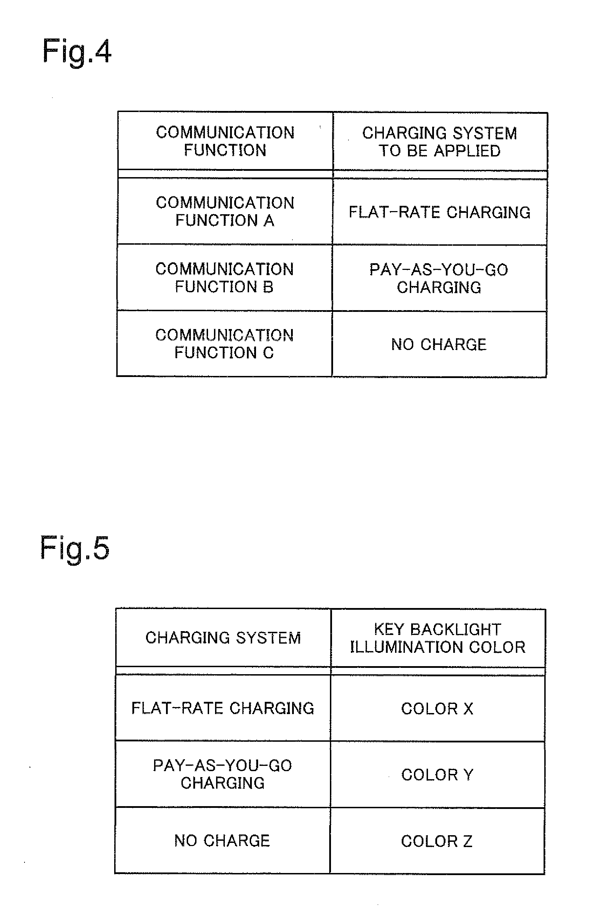

Fig. 4 is a figure showing an example of information of each communication function of the mobile phone 1 and the charging system corresponding to the each communication function that is held in the charge state determination module 33 shown in Fig. 3.

As shown in Fig. 4, this charge state determination module 33 holds the information of the each communication function of the mobile phone 1 and the charging system corresponding to the each communication function. In this case, for example, a "flat-rate charging" is applied to a "communication function A", a "pay-as-you-go charging" is applied to a "communication function B", and "no charge" is applied to a "communication function C".

Fig. 5 is a figure showing an example of information of each charging system and the key backlight illumination color corresponding to the each charging system that is held by the key backlight illumination color determination module 35 shown in Fig. 3.

As shown in Fig. 5, this key backlight illumination color determination module 35 holds the information of the each charging system and the key backlight illumination color corresponding to the each charging system. In this case, for example, a "color X" is associated with the "flat-rate charging", a "color Y" is associated with the "pay-as-you-go charging", and a "color Z" is associated with the "no charge". One of colors obtained by the additive color mixture of R (red), G (green), and B (blue) is set to these colors X, Y, and Z.

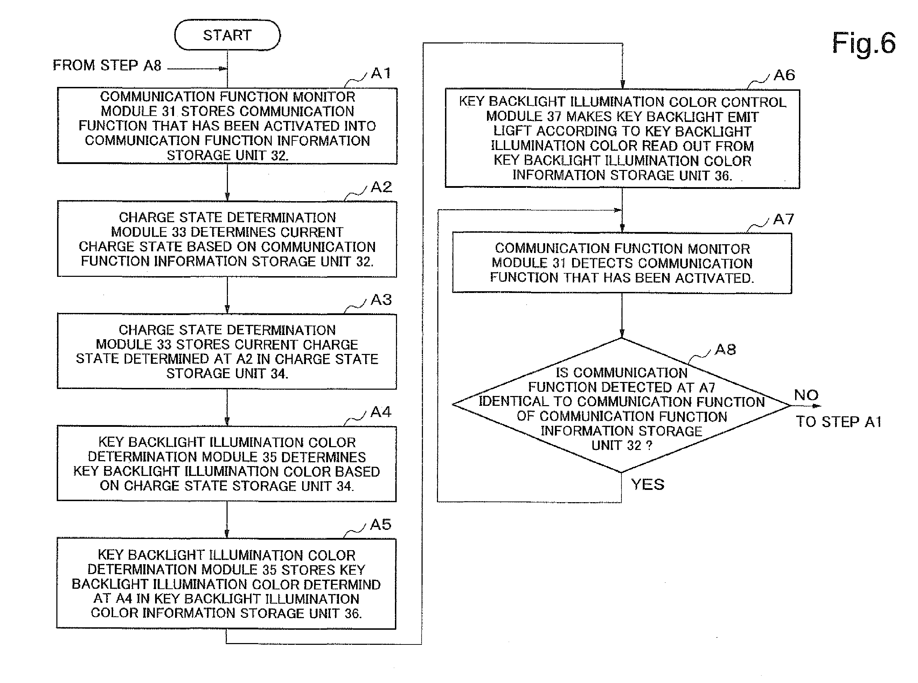

Fig. 6 is a flow chart illustrating operation of the control unit 18 shown in Fig. 3. A content of a process of a key backlight control method used for the mobile phone of this example will be described with reference to the drawing.

The mobile phone 1 displays the charge state corresponding to the type of the communication function that is being used by the illumination color of the key backlight 17. In particular, the control unit 18 sets the illumination color of the key backlight 17 to a different color according to the charge state corresponding to the type of the communication, function that is being used. (key backlight control process).

For example, when the user uses the "communication function A", as shown in Fig. 6, the communication function monitor module 31 detects the "communication function A" that has been activated and also records the "communication function A" in the communication function information storage unit 32 (step A1, communication function monitor process, communication function information storage process). The charge state determination module 33 reads out the "communication function A" from the communication function information storage unit 32. The charge state determination module 33 reads out the charging system applied to the "communication function A" from the information of the charging system shown in Fig. 4 (step A2, charge state determination process). Here, the charging system applied to the "communication function A" is the "flat-rate charging". The charge state determination module 33 records the current charge state ( "flat-rate charging") that has been read out into the charge state storage unit 34 (step A3, charge state storage process). The key backlight illumination color determination module 35 reads out the charge state from the charge state storage unit 34 and reads out the key backlight illumination color corresponding to the charge state from the information of the key backlight illumination color shown in Fig. 5 (step A4, key backlight illumination color determination process). Here, the "color X" is read out as the key backlight illumination color corresponding to the "flat-rate charging". The key backlight illumination color determination module 35 records the key backlight illumination color that has been read out in the key backlight illumination color information storage unit 36 (step A5, key backlight illumination color information storage process).

The key backlight illumination color control module 37 reads out the key backlight illumination color from the key backlight illumination color information storage unit 36 and makes the key backlight 17 emit light of the illumination color (step A6, key backlight illumination color control process). Here, the key backlight 17 is made emit light of the "color X". Next, the communication function monitor module 31 detects the communication function that has been activated (step A7). The communication function monitor module 31 compares the detected communication function with the communication function recorded in the communication function information storage unit 32 (step A8). When the communication function detected by the communication function monitor module 31 is identical to the communication function recorded in the communication function information storage unit 32, the communication function monitor module 31 returns the process to the step A7. On the other hand, when the above-mentioned communication functions are not identical to each other, the communication function monitor module 31 returns the process to the step Al. For example, when the communication function that has been activated is the "communication function B", the key backlight 17 is made emit light of the illumination color that is the "color Y" because the charging system to be applied is the "pay-as-you-go charging". When the communication function that has been activated is the "communication function C", the key backlight 17 is made emit light of the illumination color that is the "color Z" because the charging system to be applied is of "no charge".

As described above, in this exemplary embodiment, the control unit 18 sets the illumination color of the key backlight 17 to a different color according to the charge state corresponding to a type of the communication function that is being used and whereby the charge state is displayed by the illumination color of the key backlight 17. As a result, the user can distinguish whether the charging system applied to the communication function that is currently being used is "flat-rate charging", "pay-as-you-go charging", or "no charge", by the illumination color of the key backlight 17. Therefore, an effect in which the user can recognize the charge state and then, the user can use the communication function with an easy mind can be obtained.

### Exemplary embodiment 2

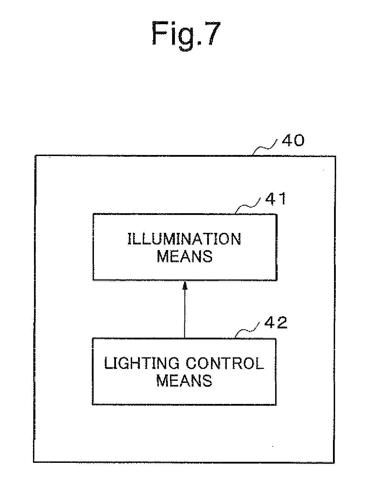

Fig. 7 is a block diagram showing a configuration of a communication terminal device 40 according to an exemplary embodiment 2 of this invention. As shown in Fig. 7, the communication terminal device 40 includes illumination means 41 and lighting control means 42. The lighting control means 42 displays the charge state corresponding to the type of the communication function that is being used in the communication terminal device by the illumination color of the illumination means 41.

As described above, in this exemplary embodiment, the lighting control means 42 displays the charge state corresponding to the type of the communication function that is being used in the communication terminal device by the illumination color of the illumination means 41. Therefore, an effect in which the user can recognize the charge state and then, the user can use the communication function with an easy mind can be obtained.

The exemplary embodiment of this invention has been described in detail by referring to the drawings. However, the specific configuration is not limited to the exemplary embodiment and even if design changes or the like are made without departing the scope of this invention, those are included in this invention.

For example, when the charging system corresponding to the communication function that is being used is the pay-as-you-go charging in which the charging is performed according to a communication time or a communication data amount, the key backlight illumination color control module 37 may operate as follows. The key backlight illumination color control module 37 may have a configuration in which in response to exceeding the communication time or the communication data amount that is set in advance, the illumination color of the key backlight is changed to another color. As a result, because the user can grasp the approximate communication charge at the time, an effect in which the user can use the communication function with an easy mind can be obtained

Further, when the charging system corresponding to the communication function that is being used is set so that the flat-rate charging is applied when the communication time or the communication data amount is equal to or smaller than a predetermined value and the pay-as-you-go charging is applied when the communication time or the communication data amount is greater than the predetermined value, the key backlight illumination color control module 37 may operate as follows. The key backlight illumination color control module 37 may be configured so that in case of the flat-rate charging, the illumination color of the key backlight is set to a "color X" and in case of the pay-as-you-go charging, the illumination color of the key backlight is set to a "color Y". The information of the charging system corresponding to each communication function of the mobile phone 1 that is held by the charge state determination module 33 shown in Fig. 4 may be delivered from a network server (not shown) of a telecommunications carriers or the like via the wireless communication unit 14 and it may be updated at any time. The lighting element 17a of which the illumination color is controlled by the key backlight illumination color control module 37 is not necessarily provided to all the key switches of the key operation unit 16. The lighting element 17a may be provided to only a part of the key switches. This invention can be applied to not only a foldable type mobile phone but also a straight type mobile phone or a slide type mobile phone with respect to a case of the mobile phone 1.

The present invention has been described with reference to the exemplary embodiment. However, the present invention is not limited to the above-mentioned exemplary embodiment. Various changes in configuration and details of the present invention which can be understood by the person skilled in the art can be made within the scope of the present invention.

### Industrial applicability

This invention can be applied to a general communication terminal device having illumination means.

This application claims priority based on Japanese Patent Application No. 2008-202060 filed on August 5th, 2008 and the disclosure of which is hereby incorporated in its entirety.

## Claims

1. A communication terminal device comprising:
illumination means; and
lighting control means for displaying a charge state corresponding to a type of a communication function that is being used in the communication terminal device by an illumination color of the illumination means.

2. The communication terminal device according to claim 1 **characterized in that**
the lighting control means sets the illumination color of the illumination means to a different color according to the charge state corresponding to the type of the communication function that is being used in the communication terminal device.

3. The communication terminal device according to claim 2 **characterized in that**:
the illumination means has lighting elements of R (red), G (green), and B (blue); and
the lighting control means individually controls each brightness of the lighting elements of R (red), G (green), and B (blue) included in the illumination means.

4. The communication terminal device according to any one of claims 1 to 3 **characterized in that**
the lighting control means includes:
communication function monitor means for distinguishing the communication function that has been activated in the communication terminal device;
charge state determination means for holding information of a charging system corresponding to the communication function in advance and determining the charging system corresponding to the communication function distinguished by the communication function monitor means based on the information of the charging system;
illumination color determination means for holding information of the illumination color corresponding to the charging system in advance and determining the illumination color corresponding to the charging system determined by the charge state determination means based on the information of the illumination color; and
illumination color control means for making the illumination means emit light of the illumination color determined by the illumination color determination means.

5. The communication terminal device according to claim 4 **characterized in that**, when the charging system corresponding to the communication function that is being used in the communication terminal device is a pay-as-you-go charging in which the charging is performed according to a communication time or a communication data amount, the illumination color control means changes the illumination color to another color in response to exceeding the communication time or the communication data amount that is set in advance.

6. The communication terminal device according to any one of claims 1 to 5 **characterized in that**
the illumination means are key backlights for illuminating one or a plurality of key switches provided in the communication terminal device.

7. A lighting control method **characterized by** comprising:
displaying a charge state corresponding to a type of a communication function that is being used in a communication terminal device by an illumination color of illumination means.

8. The lighting control method according to claim 7 **characterized in that**:
a different color is set according to the charge state corresponding to the type of the communication function that is being used in the communication terminal device.

9. The lighting control method according to claim 8 **characterized in that**:
each brightness of lighting elements of R (red), G (green), and B (blue) included in the illumination means is individually controlled.

10. The lighting control method according to any one of claims 7 to 9 **characterized by** comprising:
distinguishing the communication function that has been activated in the communication terminal device;
holding information of a charging system corresponding to the communication function in advance and determining the charging system corresponding to the distinguished communication function based on the information of the charging system;
holding information of the illumination color corresponding to the charging system in advance and determining the illumination color corresponding to the determined charging system based on the information of the illumination color; and
making the illumination means emit light of the determined illumination color.

11. The lighting control method according to claim 10 **characterized in that**, when the charging system corresponding to the communication function that is being used in the communication terminal device is a pay-as-you-go charging in which the charging is performed according to a communication time or a communication data amount, the illumination color is changed into another color in response to exceeding the communication time or the communication data amount that is set in advance.

12. A storing medium **characterized by** storing a program for causing a computer to perform:
a process for displaying a charge state corresponding to a type of a communication function that is being used in a communication terminal device by an illumination color of an illumination unit.

13. The storing medium according to claim 12 **characterized by** storing a program for causing a computer to perform:
a process for setting the illumination color of the illumination unit to a different color according to the charge state corresponding to the type of the communication function that is being used in the communication terminal device.

14. The storing medium according to claim 13 **characterized by** storing a program for causing a computer to perform:
a process for individually controlling each brightness of lighting elements of R (red), G (green), and B (blue) included in the illumination unit.

15. The storing medium according to any one of claims 12 to 14 **characterized by** storing a program for causing a computer to perform:
a process for distinguishing the communication function that has been activated in the communication terminal device;
a process for holding information of a charging system corresponding to the communication function in advance and determining the charging system corresponding to the distinguished communication function based on the information of the charging system;
a process for holding information of the illumination color corresponding to the charging system in advance and determining the illumination color corresponding to the determined charging system based on the information of the illumination color; and
a process for making the illumination unit emit light of the determined illumination color.

16. The storing medium according to claim 15 **characterized by** storing a program for causing a computer to perform:
a process in which when the charging system corresponding to the communication function that is being used in the communication terminal device is a pay-as-you-go charging in which the charging is performed according to a communication time or a communication data amount, the illumination color is changed to another color in response to exceeding the communication time or the communication data amount that is set in advance.
